# EUROPÄISCHE PATENTANMELDUNG

(11) **EP 0 622 170 A2**
(43) Veröffentlichungstag der Anmeldung: **02.11.1994**
(21) Anmeldenummer: 94104036.2
(22) Anmeldetag: 16.03.1994
(51) Int. Cl.: B29C 65/08, B42C 11/06

(54) **Vorrichtung zum Herstellen von Ein-Steckhüllen oder Einbanddecken**

(30) Priorität: 28.04.1993 DE 4313875
(71) Anmelder: KARL WIDMANN SCHWEISSMASCHINEN GMBH, D-73278 Schlierbach (DE)
(72) Erfinder:
(74) Vertreter: Patentanwälte Rüger, Barthelt & Abel

(57) **Zusammenfassung**

Eine Vorrichtung (15) zum Herstellen von Einsteckhüllen oder Einbanddecken weist ein Maschinengestell (14) auf, in dem ein Schweißstempel (16) bewegbar geführt ist. Gegenüber dem Schweißstempel (16) befindet sich eine Sonotrodenanordnung (17), um zwischen dem Schweißstempel (16) und der Sonotrodenanordnung (17) die die Einbanddecken der Einsteckhüllen bildenden Folien entsprechend der Kontur der Hüllen zu verschweißen.

Ferner ist ein Schweißstempel (16) beschrieben, dessen Konturen so gestaltet sind, daß das Profil zu beiden Seiten, bezogen auf die Laufrichtung der zu produzierenden Gegenstände offen ist. Auf diese Weise liegt die Grenze zwischen zwei aufeinanderfolgenden Einsteckhüllen innerhalb des Musters aus Schweißkanten. Dadurch wird ein Folienabfall zwischen aufeinanderfolgenden Einsteckhüllen oder Einbanddecken vermieden.

## Beschreibung

Einsteckhüllen zum Aufbewahren von Losblättern bestehen aus Folienzuschnitten, die längs wenigstens zweier unmittelbar aneinander anstoßender Kanten durch Schweißen stoffschlüssig miteinander verbunden sind. Einbanddecken, beispielsweise für Ringbücher u.dgl., sind in ähnlicher Form hergestellt, wobei in diesem Falle die Folienzuschnitte ringsherum durch Schweißnähte miteinander verbunden sind und zwischen den Folien steife Einlagen, beispielsweise aus Vollpappe, eingelegt sind. Zusätzlich können an Sollbiegestellen weitere Schweißnähte angebracht sein, die im wesentlichen quer zwischen den Längskanten verlaufen.

Sowohl die Einstückhüllen als auch die Einbanddecken werden in Maschinen produziert, denen die Folien als Endlosware von entsprechenden Rollen zugeführt wird. Die Maschine enthält einen auf- und abbewegbaren Schweißstempel, der entsprechend der Kontur der Einsteckhüllen oder Einbanddecken Schweiß- bzw. Schneidkanten trägt. Dem Schweißstempel gegenüber ist in dem Maschinengestell eine Heizeinrichtung angeordnet, die dazu dient, die Folien im Bereich der Schweiß- bzw. Schneidkanten des Schweißstempels so weit zu plastifizieren, daß die gewünschte stoffschlüssige Verbindung zustandekommt. Gleichzeitig wird von den messerförmigen Schneidkanten der entsprechende Zuschnitt während des Verschweißens erzeugt.

Beim Plastifizieren der Folien mit Hilfe von Wärme besteht die Gefahr des Verklebens der Folie mit der beheizten Unterlage, weshalb in der Regel zwischen der Heizeinrichtung und der zu verarbeitenden Folie eine Trennlage eingefügt wird, in der Regel in der Gestalt eines endlosen Bandes, um das unerwünschte Verkleben der Folie mit der Unterlage zu verhindern.

Ein weiterer Nachteil des Verschweißens unter Zuhilfenahme einer Heizeinrichtung besteht in der von einer Seite herkommenden Erwärmung. Diese einseitige Erwärmung führt innerhalb der beiden aufeinanderliegenden Folien zu einem erheblichen Temperaturgradienten. Infolge dieses Temperaturgradienten ist die der Heizeinrichtung zugekehrte Seite wesentlich stärker erweicht als die dem Schweißstempel benachbarte Seite.

Eine andere bekannte Methode zum Plastifizieren besteht darin, die Folie im zu verschweißenden Bereich mit Hochfrequenz zu erwärmen. Dieses Verfahren läßt sich jedoch nur bei solchen Folien einsetzen, die einen schlechten elektrischen Verlustwinkel haben. Durch andere Folien tritt die Hochfrequenz hindurch, ohne die Folien dabei zu erwärmen. So lassen sich beispielsweise die aus Umweltschutzgründen zu bevorzugenden Polyolefine, beispielsweise Polypropylen, nicht in Anlagen mit Hochfrequenzheizeinrichtungen verarbeiten.

Ein weiteres Problem bei der Erzeugung von Einsteckhüllen und Einbanddecken oder ähnlichen Gegenständen aus endlosen Folien ist der entstehende Abfall. Üblicherweise ist die Anordnung der Schweiß- und Schneidkanten an dem Schweißstempel ein Abbild der Schweißnähte und Schnittkanten des fertigen Produktes. Die zwangsläufige Folge hiervon ist ein strickleiterartiger Abfall, der entsteht, wenn die Produkte aus den Endlosfolien herausgetrennt werden. Dieser strickleiterartige Abfall ist u.a. auch schwierig zu handhaben.

Ausgehend hiervon ist es Aufgabe der Erfindung, eine Vorrichtung zu schaffen, um ohne Heizeinrichtung Folien zu Einstückhüllen und Einbanddecken zu verschweißen, wobei auch Folien verarbeitbar sein sollen, die einen kleinen elektrischen Verlustwinkel aufweisen. Ferner ist es Aufgabe der Erfindung, eine Vorrichtung zu schaffen, bei der bei der Produktion von Einsteckhüllen und Einbanddecken weniger Abfall entsteht.

Diese Aufgaben werden erfindungsgemäß durch eine Vorrichtung mit den Merkmalen des Anspruches 1 bzw. eine Vorrichtung mit den Merkmalen des Anspruches 19 gelöst.

Infolge der Verwendung von Ultraschall enthält die neue Vorrichtung in der Schweißstation keine beheizten Teile mehr, an denen die Folien kleben bleiben können. Außerdem dringt der Ultraschall im wesentlichen gleichmäßig in die Folien ein, so daß innerhalb der Folien im Bereich der Schweißnaht praktisch keine nennenswerten Temperaturunterschiede auftreten. Dadurch wird beim Schweißen nicht mehr die vom Schweißstempel abliegende Folie stärker zerdrückt als die dem Schweißstempel benachbarte Folie. Wegen der gleichmäßigen Erwärmung der Folie, und zwar an Ort und Stelle und nicht etwa durch Wärmeleitung von außen her, können höhere Taktzeiten und damit größere Produktionsgeschwindigkeiten erzielt werden. Außerdem ist die Plastifizierung mit Hilfe von Ultraschall vom elektrischen Verlustwinkel der Folien vollständig unabhängig. Die Plastifizierung geschieht durch Erwärmung infolge der durch die Ultraschallschwingungen angeregten Molekülschwingungen innerhalb der Folie.

Schließlich ist die Ultraschallschweißung gegenüber der Hochfrequenzschweißung wesentlich ungefährlicher, weil bei der Hochfrequenzschweißung immer die Gefahr besteht, daß an Stellen der Maschine Hochfrequenzenergie nach außen austritt und das Personal gesundheitlich gefährdet.

Bei der Ultraschallschweißung werden nur solche Bereiche der Folien erwärmt, die mit einer gewissen Mindestandruckkraft gegen die Sonotroden gedrückt werden, denn nur dort kann der Schall in die Folie eindringen. Folglich werden auch andere Bereiche der Folien, die nur lose aufliegen, nicht erwärmt. Auch dies ist ein erheblicher Vorteil gegenüber Vorrichtungen, die mit Heizstationen arbeiten.

Da bei den zu erzeugenden Produkten die Schweißflächen gegenüber der restlichen Fläche nur einen verhältnismäßig kleinen Anteil haben, besteht die Sonotrodenanordnung zweckmäßigerweise aus einzelnen Sonotroden, von denen jede eine ebene Auflagefläche für die Folien aufweist und die so angeordnet sind, daß sich alle Auflageflächen in einer gemeinsamen Ebene befinden. Diese Auflageflächen grenzen, soweit dies nicht durch die Kontur der Schweißnähte anders bedingt ist, im wesentlichen lückenlos aneinander.

Der geringste Aufwand an Sonotroden ist nötig, wenn die Sonotroden länglich ausgebildet sind und mit den Längsachsen ihrer Auflageflächen parallel zu den Schweiß- bzw. Schneidkanten ausgerichtet sind. Die Sonotroden haben dabei vorteilhafterweise eine etwa balkenförmige Gestalt.

Eine gute Energieverteilung innerhalb der Sonotrode ergibt sich, wenn die Ultraschallerzeugungseinrichtung in der Mitte und, bezogen auf die Auflagefläche, auf der gegenüberliegenden Seite angebracht ist. Die Schwingungserzeugungseinrichtung regt in den Sonotroden eine Longitudinalschwingung an, derart, daß sich eine stehende Welle ausbildet, bei der der Schwingungsbauch bei der Auflagefläche liegt.

Bei Einsteckhüllen oder Einbanddecken treten vergleichsweise sehr lange Schweißnähte auf und es muß sichergestellt sein, daß über die gesamte Länge dieser Schweißnähte exakt gleiche Andruckkräfte entstehen. Deshalb ist es günstig, wenn jede Sonotrode mittels wenigstens zweier voneinander beabstandeter Befestigungsmittel mit dem Maschinengestell verbunden ist. Dadurch kann auch langfristig eine exakte Ebenheit aller Auflageflächen der zum Schweißen einer Einsteckhülle erforderlichen Sonotroden erhalten werden. Dabei kann zusätzlich zu den Befestigungsmitteln auch noch die Schwingungserzeugungseinrichtung zum Anbringen an dem Gestell mit herangezogen werden. Andererseits ergeben sich durchaus Vorteile, wenn die Schwingungserzeugungseinrichtung nicht mit dem Maschinengestell, sondern nur mit der Sonotrode mechanisch verbunden ist.

Die elektrischen bzw. akustischen Verluste infolge von Schallenergie, die wirkungslos im Maschinengestell verschwindet, lassen sich verhindern, wenn die Befestigungsmittel in geschickter Weise an der Sonotrode angebracht werden und, bezogen auf die Wellenlänge der angeregten Ultraschallschwingung, eine geeignete Länge bis zur Befestigungsstelle an dem Maschinengestell aufweist. Eine beispielsweise sehr verlustarme Befestigung besteht darin, an der balkenförmigen Sonotrode Laschen vorzusehen, die auf der Stirnseite der Sonotrode parallel zu der Auflagefläche vorstehen. Die Lasche befindet sich in einem solchen Abstand von der Auflagefläche, daß bei der angenommenen stehenden Welle in der Sonotrode diese Laschen sich auf der Ebene der Schwingungsknoten der Longitudinalschwingungen befinden. Außerdem können weitere Verbesserungen erzielt werden, wenn die Befestigungsmittel als Stäbe ausgebildet sind, deren Länge bis zur Befestigungsstelle an dem Maschinengestell die halbe Wellenlänge beträgt.

Eine andere Möglichkeit, das gleiche Ziel zu erreichen, besteht darin, Stäbe zu verwenden, die mit der der Auflagefläche gegenüberliegenden Seite der Sonotrode verbunden sind. An dieser Fläche befindet sich für gewöhnlich ein Schwingungsbauch, d.h. die Schwingamplitude ist dort am größten. Auch in einem solchen Falle ist eine Befestigung an dem Maschinengestell ohne Einkoppeln von Ultraschallenergie möglich, indem Stäbe verwendet werden, die eine Länge von λ/2 aufweisen, wobei sich etwa auf der Hälfte der Länge, also bei λ/4, ein Fortsatz oder Flansch befindet, um den betreffenden Stab formschlüssig mit dem Maschinengestell zu verbinden. In jedem Falle liegen die Stäbe mit ihrer Längsachse rechtwinklig zu einer von der Auflagefläche definierten Ebene.

Wenn die Anordnung der Schweiß- und Schneidkanten an dem Schweißstempel so gestaltet ist, daß sich ein,in Transportrichtung der Folien gesehen, offenes Muster ergibt, kann der Schnittabfall bei den Folien deutlich verringert werden. Bei einem solchen offenen Muster liegt die quer verlaufende Kante, die ein Produkt gegenüber der Folie bzw. dem nächsten Produkt abgrenzt, sozusagen auf das Innere des Musters verschoben. Infolge dieser Anordnung wird bei einem Schweißzyklus das stromabwärts liegende Produkt hinsichtlich der Schweiß- und Trennähte vervollständigt, während von dem nachfolgenden Produkt die erste Querkante und ein Stück der in Längsrichtung liegenden Schweißnähte produziert wird. Auf diese Weise entfällt der Abfall zwischen benachbarten Produkten. Der Abfall sind somit nurmehr noch zwei seitliche Streifen, während die sonst anfallenden Quersprossen in dem strickleiterartigen Abfall bei geschlossenen Kantenmustern entfallen.

Mit dem neuen Stempel werden zur vollständigen Fertigstellung eines Produktes zwei Hübe benötigt, was aber, wegen der fortlaufenden Produktion, keinen Nachteil darstellt. Selbst wenn in Längsrichtung bei der Verschweißung ein gewisser Versatz auftreten sollte, ist er nach außen hin praktisch nicht zu bemerken, weil die Längsschweißnähte dann an der Versatzstelle ein Stückchen stärker überlappen. Daß der Abstand der Querschweißnähte dann unter Umständen um Bruchteile von Millimetern variiert, ist bei einem Grundabstand der Querschweißnähte von 20 bis 30 cm nicht zu bemerken.

In der Zeichnung sind Ausführungsbeispiele des Gegenstandes der Erfindung dargestellt. Es zeigen:
- Fig. 1: eine aus zwei Folien zusammengeschweißte Einbanddecke in einer perspektivischen Darstellung,
- Fig. 2: eine Vorrichtung zum Trennschweißen der in Fig. 1 gezeigten Einbanddecke, in einer stark schematisierten Seitenansicht,
- Fig. 3: die Vorrichtung nach Fig. 2 in einer vergrößerten Darstellung und in einer Blickrichtung parallel zu der Transportvorrichtung innerhalb der Vorrichtung,
- Fig. 4: die Befestigung der Sonotrode nach Fig. 3 in einer vergrößerten Seitenansicht,
- Fig. 5: die Sonotrode nach Fig. 5 in einer Stirnansicht,
- Fig. 6: eine andere Befestigungsart der Sonotrode in einer Seitenansicht,
- Fig. 7: die Sonotrode nach Fig. 6 in einer Seitenansicht,
- Fig. 8: die Sonotroden der Vorrichtung nach Fig. 3 in einer Draufsicht,
- Fig. 9: die Draufsicht auf einen Schweißstempel zum Trennschweißen der Einbanddecke nach Fig. 1,
- Fig.10: einen schematisierten Querschnitt durch den Schweißstempel nach Fig. 8 längs der Linie X-X und

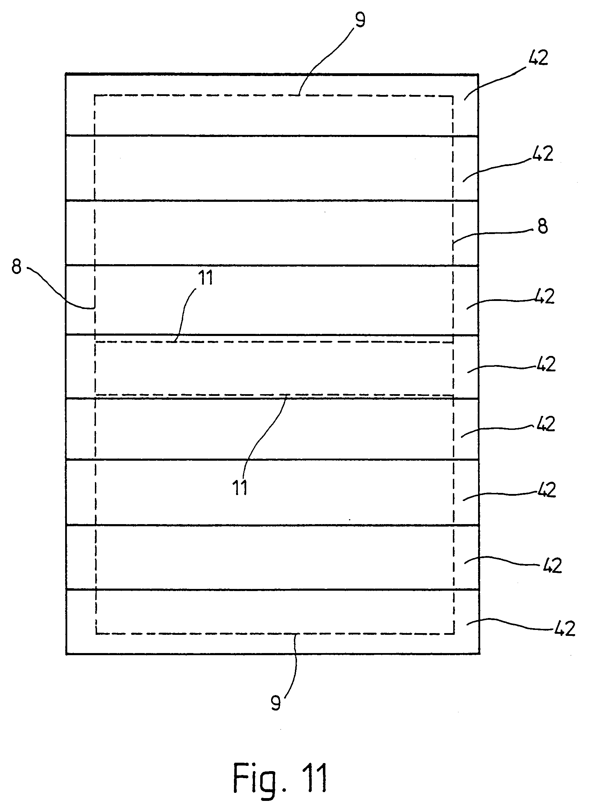

- Fig.11: eine andere Ausführungsform der Sonotroden der Vorrichtung nach Fig. 3 in einer Draufsicht.

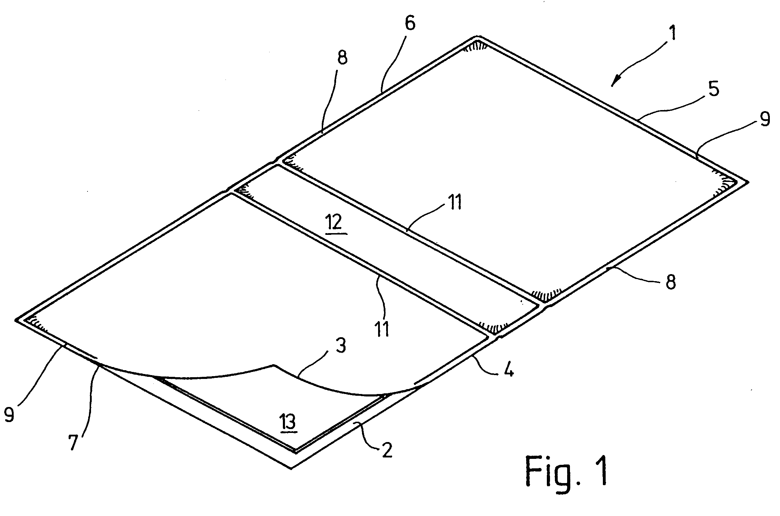

Fig. 1 zeigt eine Einbanddecke 1, die aus zwei dünnen Folienzuschnitten 2 und 3 besteht. Diese beiden Folienzuschnitte sind längs all ihrer Außenkanten 4, 5, 6 und 7 mit fortlaufenden Schweißnähten 8 bzw. 9 verbunden, die paarweise zueinander parallel im Abstand verlaufen. Zwischen den Schweißnähten 9 verlaufen weitere Schweißnähte 11, ebenfalls im Abstand zueinander parallel, die Sollbiegestelle der Einbanddecke 1 bilden und zwischen sich einen Bereich 12 begrenzen, der an dem mit der Einbanddecke 1 versehenen Produkt, beispielsweise einem Ringbuch, den Buchrücken darstellt. Die Schweißnähte 11 gehen stumpf in die beiden Schweißnähte 8 an beiden Enden über.

Um die Einbanddecke 1 zu verstärken, liegen zwischen den beiden Folien 2 und 3 Verstärkungseinlagen in Gestalt von Vollpappezuschnitten 13, wie dies an der geöffneten Ecke der Einbanddecke 1 zu erkennen ist. Im einzelnen befinden sich zwei gleich große Vollpappezuschnitte 13 in den Flächen, die von den Schweißnähten 8, 9 und 11 begrenzt sind, während ein kleinerer, entsprechend bemessener Vollpappezuschnitt in dem Bereich 12 zwischen den beiden Schweißnähten 11 liegt.

Sämtliche Schweißnähte 8, 9, 11 sind dadurch erzeugt, daß mit Hilfe einer Ultraschalleinrichtung die Bereiche, in denen die Schweißnähte später gebildet sind, die Kunststoffolien plastifiziert sind. Diese können aus jedem geeigneten plastifizierbaren Material bestehen. Beispielsweise können sie auch aus Polyolefinen bestehen, wie Polypropylen, das durch Hochfrequenz nicht verschweißbar ist.

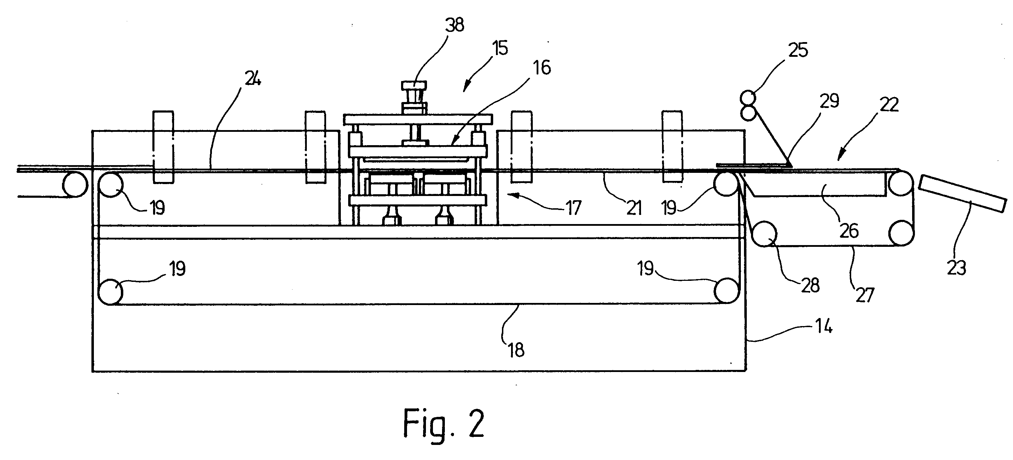

Die Vorrichtung zum Produzieren der Einbanddecken 1 ist in Fig. 2 stark schematisiert gezeigt. Sie weist ein Maschinengestell 14 auf, in dem sich eine Schweißstation 15 befindet. Die Schweißstation umfaßt einen darin beweglich geführten Schweißstempel 16 und eine dem Schweißstempel gegenüber befindliche Sonotrodenanordnung 17.

Ferner läuft durch das Maschinengestell 14 ein endloses Förderband 18, das um insgesamt vier in dem Maschinengestell 14 drehbar gelagerte Rollen 19 umläuft. Die Breite des Förderbandes 19 ist gleich der maximalen Breite von zu verarbeitenden Folienbahnen. Das Förderband 18 läuft mit seinem Arbeitstrum 21 zwischen dem Schweißstempel 16 und der Sonotrodenanordnung 17 durch und beginnt stromaufwärts der Schweißstation 15. Es endet stromabwärts der Schweißstation 15 bei einer Vakuumfördereinrichtung 22, die dazu dient, die fertig verschweißten und voneinander separierten Einbanddecken 1 in einer Ablage 23 zu stapeln.

Der Schweißstation 15 werden übereinanderliegend in bekannter Weise in endloser Form von Vorratsrollen kommende Folienbänder 24 zugeführt. Die Vorratsrollen, von denen die beiden Folienbänder 24 abgewickelt werden, sind in der Zeichnung nicht weiter veranschaulicht. Zwischen die beiden Folienbänder 24 werden in bekannter Weise die dem Versteifen dienenden Zuschnitte 13 lagerichtig eingefügt. Die hierzu erforderlichen apparativen Einrichtungen sind bekannt und brauchen deswegen an dieser Stelle im einzelnen nicht erläutert zu werden.

Die solchermaßen sandwichartige Anordnung aus der unteren Folienbahn, den Verstärkungsanlagen 13 und der oberen Folienbahn gelangt in die Schweißstation 15, in der mit Hilfe des Schweißstempels 16,der taktweise auf- und abbewegt wird, die Folienbahnen 24 längs der in Fig. 1 sichtbaren Schweißnähte 8, 9, 11 miteinander verschweißt werden. Gleichzeitig geschieht ein Trennvorgang, in dem das überschüssige Material der Folien von den Einbanddecken 1 abgeschnitten wird. Zum Verschweißen bewegt sich der Schweißstempel 16 in Richtung auf die ortsfesten Sonotrodenanordnung 17, die die beiden Folienbahnen 24 zum Verschweißen plastifiziert.

Nach dem Verschweißen der Folienbahnen 24 liegen auf dem Arbeitstrum 21 die von dem Abfall der Folienbahnen 24 separierten Einbanddecken 1 und werden mit Hilfe des Förderbandes 21 zu dem Vakuumförderer 22 geschafft. Gleichzeitig werden mit Hilfe einer veranschaulichten Transport- und Aufwickeleinrichtung 25 die beiden streifenförmigen Abfallreste der Folienbahnen 24 aufgewickelt, um sie entsorgen zu können.

Der Vakuumförderer 22 besteht aus einem Vakuumkasten 26, über den ein gelochtes endloses Transportband 27 läuft, das mittels Rollen 28 in dem Gestell 14 gelagert ist. Das Vakuumförderband 27 hat dieselbe Laufrichtung wie das Förderband 18 und soll mit Hilfe der Vakuumfördereinrichtung 22 zwangsweise die an sich von dem Abfall weitgehend getrennten Einbanddecken 1 von den Abfallstreifen vollständig abreißt, falls der Trennschweißvorgang nicht an allen Stellen das Material vollständig durchtrennt hat. Der Abzug der Abfallstreifen erfolgt deswegen auch an einer Kante 29, die sich oberhalb des Vakuumkastens 2-6 befindet. Die Vakuumfördereinrichtung 22 hält die fertig verschweißten Einbanddecken 1 zwangsweise fest, um sie zu dem Sammelkasten 23 zu schaffen, während die beiden Abfallstreifen der Folienbänder mit Hilfe der Abzugseinrichtung 25 nach oben um die Kante 29 herum abgezogen werden.

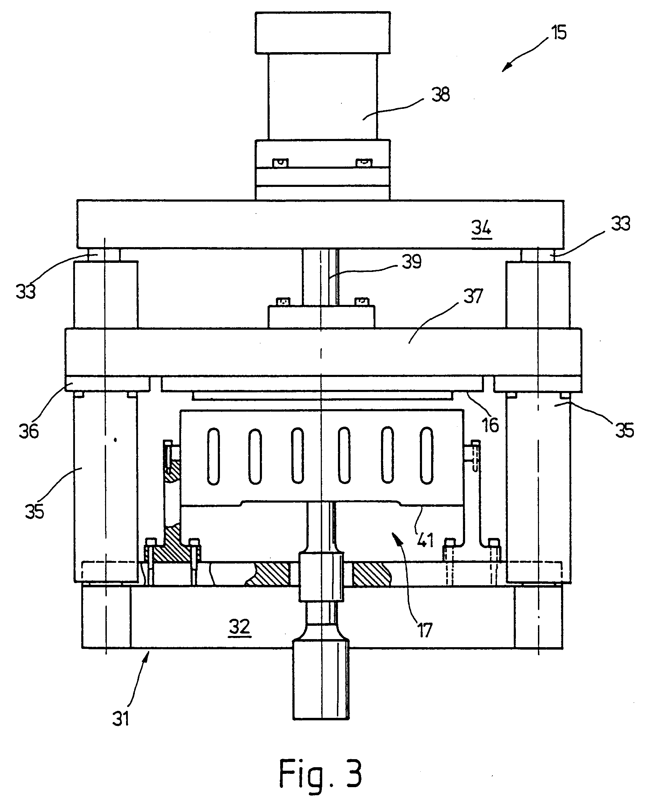

Der Aufbau der Heizstation 15 ist nachstehend anhand der Fig. 3 bis 7 erläutert.

Wie insbesondere Fig. 3 erkennen läßt, ist die Schweißstation 15 etwa portalartig aufgebaut und weist einen unteren Gestellrahmen 31 auf, den miteinander verbundene Traversen 32 bilden.

An den Ecken des Gestellrahmens 31 erheben sich insgesamt vier zylindrische Säulen 33, die den unteren Gestellrahmen 31 mit einem Joch 34 verbinden, das parallel und im Abstand zu dem unteren Gestellrahmen 31 angeordnet ist. Auf jeder der vier Säulen 33 läuft je eine Führungsbüchse 35, die in der Nähe ihrer Enden jeweils eine nicht erkennbare Kugelführungsbüchse enthält. In dem oberen Drittel ist jede der Büchsen mit einem Flansch 36 versehen, auf dem eine Plattform 37 aufliegt, die mit Schrauben 38 an dem Flansch 36 befestigt ist. Die Plattform 37 dient der Halterung des eigentlichen Schweißstempels 16.

Auf der Oberseite des Querjochs 34 ist ein zweiseitig wirkender Pneumatikzylinder 38 aufgeflanscht, dessen Kolbenstange 39 mit der Oberseite der Plattform 37 verbunden ist, um die Plattform 37 wahlweise auf- und abzubewegen. Die Steuerungseinrichtung sowie die Druckquelle für den zweiseitig wirkenden Pneumatikzylinder 38 ist im einzelnen nicht dargestellt.

Die Sonotrodenanordnung 17 besteht aus einer Anzahl einzelner Sonotroden 41, die auf dem unteren Gestellrahmen 31 aufgeständert sind. Jede Sonotrode 41 ist ein länglicher, quaderförmiger Block, d.h. er hat eine etwa balkenförmige Gestalt mit einer ebenen rechteckigen Oberseite 42, die die Auflagefläche für das Arbeitstrum 21 des Förderbandes 18 darstellt.

Die Anordnung der Sonotroden 41 in der Schweißstation 15 entspricht dem Verlauf der Schweißnähte 8, 9 und 11 der herzustellenden Einbanddecken 1. Im einzelnen bedeutet dies, daß je eine Sonotrode 41, wie in Fig. 3 gezeigt, unter den Schweißnähten 9 verläuft, wobei ihre Länge zweckmäßigerweise etwas größer ist als die Länge der Schweißnaht 9. Wenigstens eine, vorzugsweise jedoch zwei einzelne Sonotroden 41, erstrecken sich unterhalb der Schweißnaht 8, und zwar möglichst lückenlos zwischen den beiden Sonotroden 41, die sich unter den Schweißnähten 9 befinden. Weitere ein oder zwei Sonotroden 41 liegen unter den Schweißnähten 11 und stoßen möglichst lückenlos an die Sonotroden 41 für die Schweißnähte 9 an. Die Auflageflächen 42 aller Sonotroden 41 zusammen ergeben eine weitgehend geschlossene Fläche, auf der sämtliche Schweißnähte 8, 9, 11 Platz finden. Wegen der Breite der Auflagefläche 42 erstrecken sich die Sonotroden 41, die sich an sich unter den Schweißnähten 9 befinden, auch noch ein Stück weit unter die angrenzenden Bereiche der Schweißnähte 8.

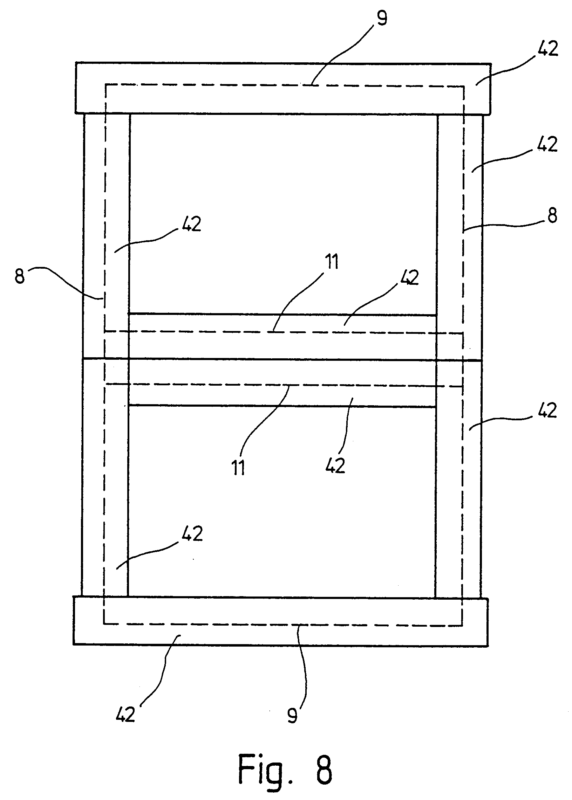

Die Draufsicht auf die Sonotroden 41 ergibt damit ein Bild, wie es in Fig. 8 gezeigt ist.

Der Verlauf der Schweißnähte 8, 9, 11 ist darin gestrichelt eingezeichnet.

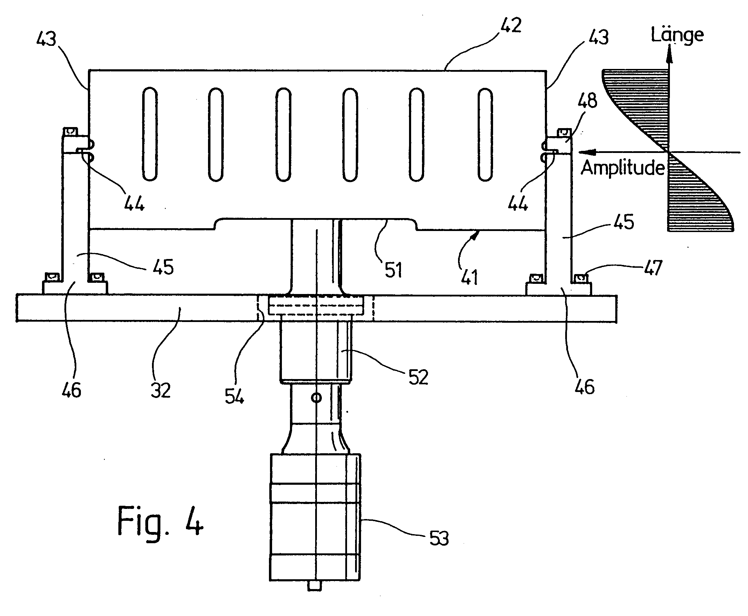

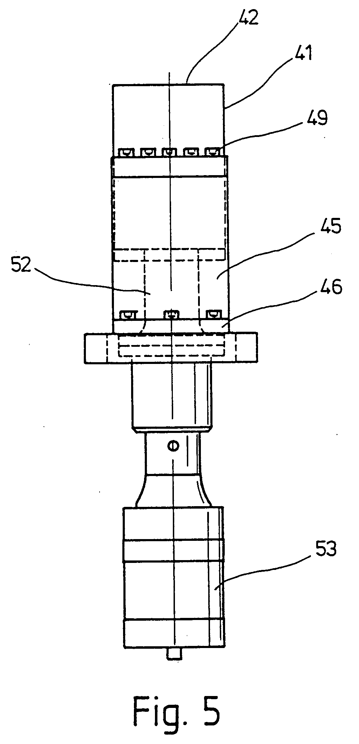

Eine Möglichkeit für die Befestigung der Sonotrode 41 auf dem unteren Gestellrahmen 31 ist in den Fig. 4 und 5 vergrößert dargestellt. Hiernach ist die Sonotrode 41 an ihren beiden zueinander parallelen und ansonsten planen Stirnflächen 43 mit jeweils einer über die Stirnfläche 43 vorstehenden Lasche 44 versehen. Mit diesen beiden Laschen 44 liegt die Sonotrode 41 somit endseitig unterstützt auf zwei im Querschnitt rechteckigen Stäben 45 auf, die an ihrem unteren Ende in einen Flansch 46 übergehen. Der Flansch 46 steht auf der entsprechenden Strebe 32 des Gestellrahmens 31 auf und ist dort mit Schrauben 47 festgeschraubt.

Damit die Sonotrode 41 nicht von der Oberseite des Stabes 45 herunterfällt, ist sie auf der Oberseite des betreffenden Stabes 45 mit je einer Spannpratze 48 festgeklemmt, die ihrerseits mittels einer Reihe von Schrauben 49 auf der Oberseite des Stabes 45 befestigt ist. Die Breite des Stabes 45 sowie der Spannpratze 48 entspricht der Breite bzw. Dicke der Sonotrode 41, also der Breite der Auflagefläche 42 und ist damit genauso breit wie die Lasche 44 lang ist.

Die Sonotrode 41 wird an ihrer der Auflagefläche 42 gegenüberliegenden Seite 51 mit Hilfe eines daran befestigten Boosters 52 und einem an dem Booster 52 angeflanschten Konverter 53 in Ultraschallschwingungen versetzt. Der Booster 52 ragt durch eine entsprechende Öffnung 54 in der Strebe 32 nach unten. Weder der Booster 52 noch der Konverter 53 sind für sich mit dem Maschinengestell 14 verbunden. Der Booster 52 ragt frei und ohne Berührung durch den unteren Gestellrahmen 31 hindurch.

Der Konverter 53 ist in bekannter Weise mit einem nicht weiter gezeigten Ultraschallgenerator elektrisch verbunden. Wenn dieser Generator in Gang gesetzt wird, wandelt der Konverter 53 die elektrische Schwingung in eine mechanische Bewegung des Boosters 52 um, der diese Bewegung an die Sonotrode 41 weitergibt. Hierdurch entsteht in der Sonotrode 41 eine Longitudinalschwingung, und bei entsprechend gewählter Frequenz eine stehende Welle mit einem Amplitudenverlauf, wie er in Fig. 4 auf der rechten Seite gezeigt ist. Danach hat die stehende Welle in der Sonotrode 41 zwei Schwingungsbäuche, von denen der eine an der Auflagefläche 42 und der andere im Bereiche der Unterseite 51 liegt. Zwischen diesen beiden Schwingungsbäuchen gibt es einen Schwingungsknoten, der im Falle der balkenförmigen Sonotrode 41 zu einer Knotenfläche wird, die zu der Auflagefläche 42 parallel ist und in der Mitte zwischen der Auflagefläche 42 und der Unterseite 51 liegt. Im Bereiche dieser Knotenfläche ist die Sonotrode 41 ständig relativ in Ruhe und es sind deswegen auf der Höhe dieser Knotenfläche die beiden Laschen 44 vorgesehen. Hierdurch wird verhindert, daß Ultraschallenergie aus der Sonotrode 41 in das Maschinengestell 14 gelangt. Andererseits wird durch die Zweipunktauflage der Sonotrode 41 die exakte Ausrichtung der Auflagefläche 42 zu dem Gestellrahmen 31 und damit zu dem Schweißstempel 16 gewährleistet. Die an zwei Enden unterstützte Sonotrode 41 kann sich während des Niederdrückens des Schweißstempels 16 nicht verbiegen und es entsteht eine über die gesamte Länge der Sonotrode 41 gleichförmige Schweißnaht von bis zu 30 cm oder mehr, je nach den Abmessungen der Einbanddecke 1.

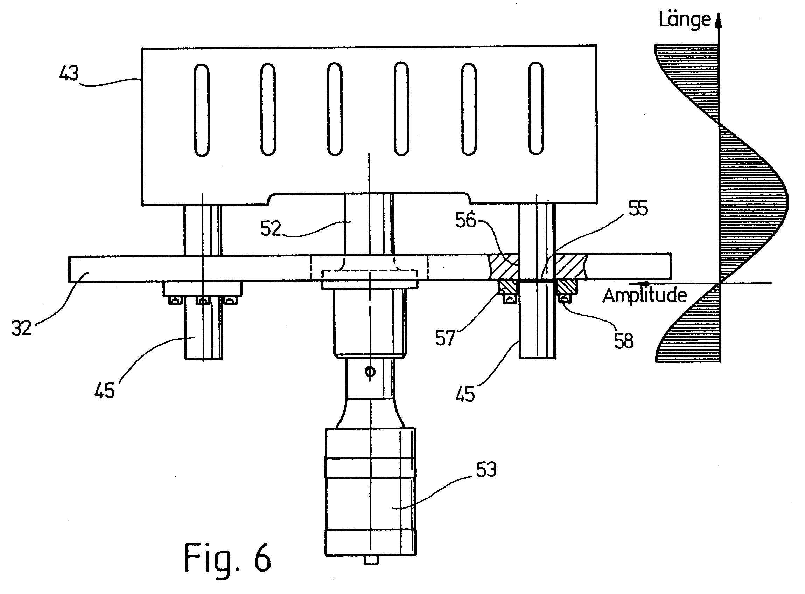

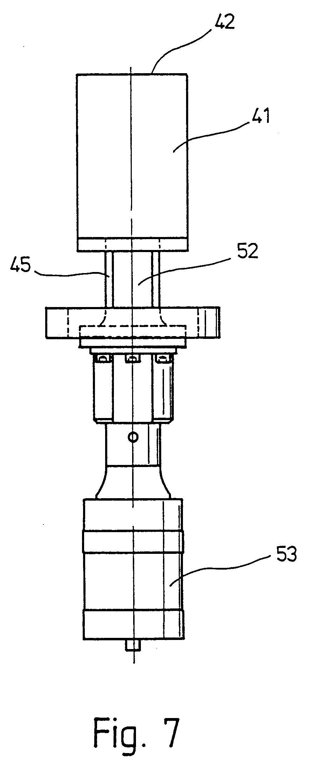

Nachteilig bei der beschriebenen Art der Befestigung der Sonotrode 41 an dem unteren Gestellrahmen 31 ist, daß die Sonotrode 41 nicht ohne Lücke an der Stirnseite an eine benachbarte Sonotrode 41 anstoßen kann. Dieser Nachteil wird mit einer Befestigungsart vermieden, wie sie in den Fig. 6 und 7 gezeigt ist.

Bei dieser Befestigungsart befinden sich die Stäbe 45 in Gestalt von zylindrischen Säulen an der Unterseite 51 und sie sind gegenüber den Stirnseiten 43 ein Stück weit zurückversetzt. Die nunmehr zylindrischen Stäbe 45 sind bezüglich des Boosters 52 äquidistant angeordnet und an der Unterseite 51 festgeschraubt. Etwa in der Mitte, bezogen auf ihre Länge, tragen sie einstückig einen umlaufenden Ringbund 55, der, bezogen auf die Länge des Stabes 45, eine geringe axiale Ausdehnung von ca. 2 mm hat. Dieser Ringbund 55 befindet sich etwa in der Mitte, bezogen auf die Lange des Stabes 45, der durch eine entsprechende Bohrung 56 in der Strebe 32 mit Spiel hindurchführt. Mittels eines Rings 57, der von unten her auf den zylindrischen Stab 55 aufgeschoben ist, wird der Ringbund 55 gegen die betreffende Strebe 32 angepreßt, und zwar mit Hilfe einer Reihe von Schrauben 58, die durch den Ring 57 hindurchführen und in die Strebe 32 eingeschraubt sind.

Abweichend von der dargestellten Form ist es auch möglich, den Ringbund 55 auf die Oberseite der Strebe 32 aufzustellen, die hierzu entsprechend plan bearbeitet ist. In jedem Fall soll, abgesehen von dem Ringbund 55, den Stab 45 berührungsfrei durch die Strebe 32 hindurchführen.

Die Lage des Ringbundes 55 ist wiederum so gewählt, daß sich eine minimale Einkopplung von Ultraschallenergie in die Strebe 32 ergibt. Wie das in Fig. 6 auf der rechten Seite angegebene Amplitudendiagramm zeigt, ist, wie vorher, ein Schwingungsbauch im Bereich der Auflagefläche 42 vorhanden. Ein zweiter Schwingungsbauch befindet sich an der Unterseite 51 und der nächste Schwingungsknoten,wiederum eine Knotenfläche, liegt dort, wo sich der Ringbund 55 befindet.

Da im Gegensatz zu der Befestigung nach Fig. 4 bei der Befestigung nach Fig. 6 der Stab 45 seinerseits mit Ultraschallenergie angeregt ist, hat er einen über den Ringbund 55 hinausragenden Abschnitt mit einer Länge von λ/4, damit die Resonanzabstimmung des Systems nicht beeinträchtigt wird.

Der wesentliche Unterschied zwischen der Befestigung nach Fig. 4 und der Befestigung nach Fig. 6 besteht darin, daß im einen Falle die Sonotrode 41 an einer Stelle mit dem Stab 45 verbunden ist, an der keine Ultraschallenergie aus der Sonotrode 41 austritt, während im anderen Falle die Befestigung an einer Stelle erfolgt, wo die Schwingamplitude ihr Maximum hat, weshalb im Falle von Fig. 6 der gesamte Stab 45 ebenfalls schwingt. Deswegen ist bei der Ausführung nach Fig. 4 die Länge des Stabes 45 weitgehend gleichgültig, während im Falle der Ausführung nach Fig. 6 der Stab 45 die Länge von λ/2 hat und der Ringbund 55 sich etwa auf der Mitte befindet.

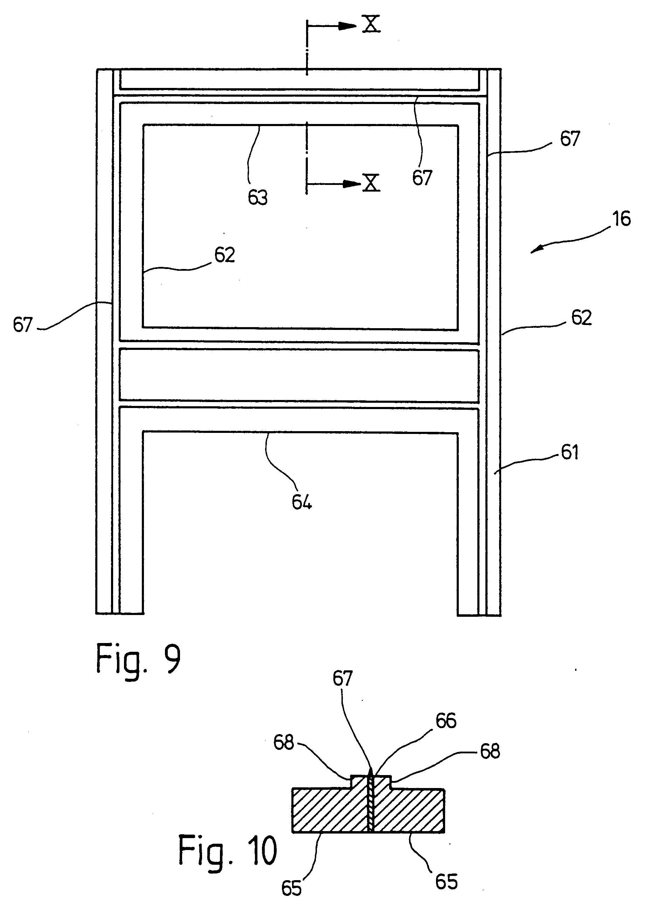

Fig. 9 zeigt den Schweißstempel 16 gemäß weiterer Erfindung in einer Draufsicht. Dieser Schweißstempel 16 besteht aus einem den Konturen der Schweißnähte der Einbanddecke 1 entsprechenden Grundrahmen 61 mit zwei voneinander beabstandeten und zueinander parallelen in Längsrichtung liegenden Schenkeln 62, die durch zwei quer dazu sich erstreckende Schenkel 63 und 64 miteinander verbunden sind. Der in Querrichtung liegende Schenkel 63 hat das in Fig. 10 gezeigte Profil und er besteht aus zwei aneinander anliegenden Leisten 65, zwischen denen hochkantstehend eine Schneidklinge 66 mit einer scharfen Schneide 67 eingesetzt ist. Die Schneidklinge 66 bildet die Schneidkante, längs derer bei der Produktion aufeinanderfolgender Einbanddecken 1 voneinander getrennt werden. Außerdem liegen neben der Schneidklinge 66 zu beiden Seiten schmale Schweißflächen 68, die gegenüber der Schneidkante geringfügig zurückspringen, wobei der Höhenversatz etwa der Dicke der beiden aufeinanderliegenden Folienbahnen 24 entspricht. Die Breite der Schweißkanten oder Schweißflächen 68, gemessen in Richtung senkrecht zu der Schneidkante, entspricht der Breite der jeweiligen Schweißnaht.

Die Struktur auf den beiden Schenkeln 62 unterscheidet sich von dem in Fig. 10 gezeigten Querschnitt dadurch, daß nur eine der beiden Schweißflächen 68 vorhanden ist.

Auf dem Schenkel 64 dagegen fehlt auch die Schneidkante 67 und es sind den beiden Schweißnähten 11 entsprechend lediglich zwei Schweißkanten 68 im entsprechenden Abstand voneinander vorhanden.

Ersichtlicherweise hat der Schweißstempel nach Fig. 9 lediglich eine in Querrichtung verlaufende Schneidkante 67, während sich die Schweißkanten 68 auf den Schenkeln 62 über die querverlaufende Schneidkante 67 hinaus erstrecken. Das Muster der Schneidkanten 67 des Schweißstempels 9 stimmt damit nicht mit der Außenkontur der Einbanddecke 1 überein. Die Außenkontur der Einbanddecke 1 wird vielmehr nur dadurch erhalten, daß der Schweißstempel 16 zweimal nacheinander an zwei um die Länge der Einbanddecke 1 gegeneinander versetzte Stellen auf den Folienbahnen 24 zur Einwirkung gebracht wird.

Durch diese neue Form des Schweißstempels 16 werden Schnittabfälle zwischen aufeinanderfolgenden Einbanddecken 1 vermieden, da der Schenkel 63 des Schweißstempels 16 eine für aufeinanderfolgende Einbandecken 1 gemeinsame Schneidkante 67 aufweist. Ein geringer Längenversatz in Transportrichtung, d.h. in Richtung der Schenkel 62 hat auf die Herstellungsgüte keinen Einfluß. In jedem Falle entsteht nur eine einzige Querschneidnaht.

Die Arbeitsweise mit dem neuen Schweißstempel 16 ist wie folgt:
Wenn der Schweißstempel 16, gesteuert über die Antriebseinrichtung 38, in Richtung auf die Sonotrodenanordnung 17 abgesenkt wird, werden von der einen Einbanddecke 1 die bisher noch nicht erzeugten Bereiche der in Längsrichtung liegenden Schweißnähte 8 sowie die beiden Querschweißnähte 11 und die stromaufwärts gelegene Querschweißnaht 9 erzeugt, da beim Niederdrücken des Schweißstempels 16 auf die Fördereinrichtung 18 die Ultraschallenergie der Sonotrodenanordnung 17 in die Folienbahnen 24 eingekoppelt wird. Dort, wo die Folienbahnen 24 mit Hilfe der Schweißkanten 68 auf die Folienbahnen 24 niedergedrückt wird, werden die Folienbahnen 24 durch die Ultraschallenergie plastizifiert und können miteinander verschweißen. Gleichzeitig trennen die Schneidkanten 67 an den entsprechenden Stellen die beiden Folienbahnen 24 durch.

Nach dem Hochgehen des Schweißstempels 16 werden die beiden Folienbahnen 24 zusammen mit der unvollständigen Einbanddecke 1 weitertransportiert, und zwar um einen Weg, der der Länge der Einbanddecke 1 , gemessen zwischen den beiden Querschweißnähten 9, entspricht. Da beim vorausgehenden Abwärtshub des Schweißstempels 16 von der nachfolgenden Einbanddecke 1 die stromabwärts gelegene Querschweißnaht 9 sowie ein kurzes Stück der in Längsrichtung liegenden Schweißnähte 8 erzeugt wird, werden beim nachfolenden Schweißhub der Rest der in Längsrichtung liegenden SChweißnähte 8 sowie die Querschweißnähte 11 und die stromaufwärts liegende Querschweißnaht 9 erzeugt. Gleichzeitig damit wird wiederum für die nun folgende Einbanddecke 1 die stromabwärts gelegene Querschweißnaht 9 und ein Stück der beiden in Längsrichtung liegenden Schweißnähte 8 hergestellt.

Abgesehen von der allerersten Einbanddecke 1, die Abfall darstellt, werden im Anschluß daran mit jeweils zwei aufeinanderfolgenden Hüben des Schweißstempels 16 vollständige Einbanddecken 1 erzeugt, ohne daß zwischen aufeinanderfolgenden Einbanddecken 1 ein Abfall entsteht. Vielmehr grenzen aufeinanderfolgende Einbanddecken 1 an der Schnittkante unmittelbar aneinander und es werden von aufeinanderfolgenden Einbanddecken 1 die aneinander angrenzenden Querschweißnähte 9 gleichzeitig hergestellt.

Die in Fig. 8 dargestellte Anordnung der Sonotroden 42 ist speziell an den Verlauf der Schweißnähte 8, 9 und damit der Schweiß- bzw. Schneidkanten 66, 67 angepaßt. Eine so bestückte Maschine wäre speziell in Richtung der Herstellung von Einbanddecken gemäß Fig. 1 optimiert. Wenn dagegen mit der Maschine abwechselnd unterschiedliche Gegenstände mit anderen Verläufen der Schweißnähte hergestellt werden sollen, wird zweckmäßigerweise eine Sonotrodenanordnung verwendet, wie sie in Fig. 10 dargestellt ist. Bei dieser Anordnung sind insgesamt neun balkenförmige Sonotroden 42 mit ihren Längsachsen parallel nebeneinander angeordnet, und zwar so, daß unmittelbar benachbarte Sonotroden einander praktisch berühren. Diese insgesamt neun Sonotroden 42 ergeben eine entsprechend große geschlossene Tischfläche, mit der alle Gegenstände produziert werden können, deren Außenkontur kleiner als die Tischfläche ist. Die Gesamtabmessungen eines solchen Tisches betragen beispielsweise bis zu 40 x 80 cm. Im übrigen ist die Funktionsweise, wie oben, beschrieben, d.h. es können plastifizierbare Folien, wie Polypropylen, verarbeitet werden, die einen nur sehr engen Schweißtemperaturbereich aufweisen. Dieses Material erfordert nämlich eine sehr genaue Prozeßtemperatur, weil unterhalb des Bereiches keine Erweichung stattfindet, die zu einem Verkleben der weichen Teile führt und oberhalb des sehr schmalen Temperaturbereiches das Material bereits wegzufließen beginnt. Beim Ultraschallschweißen besteht diese Gefahr dagegen nicht.

## Patentansprüche

1. Vorrichtung zum Herstellen von Einsteckhüllen oder Einbanddecken (1), wobei die Einsteckhüllen und die Einbanddecken (1) von miteinander an Schweißnähten (8,9,11) stoffschlüssig verbundenen termoplastischen Folien (24) gebildet sind,
mit einem Maschinengestell (14),
mit einem in dem Maschinengestell (14) angeordneten Schweißstempel (16), der den Konturen der Schweißnähte (8,9,11) entsprechende Schweiß- bzw. Schneidkanten (67, 68) aufweist, die im wesentlichen in einer Ebene liegen, sowie
mit einer dem Schweißstempel (16) gegenüber befindlichen und in dem Maschinegestell (14) angeordneten Sonotrodenanordnung (17) zum Ultraschallschweißen, wobei der Schweißstempel (16) und die Sonotrodenanordnung (17) durch eine Antriebseirichtung (38) voneinander weg bzw. aufeinander zu bewegbar sind, und
mit einer Ultraschallgeneratoranordnung zum Anregen der Sonotrodenanordnung (17).

2. Vorrichtung nach Anspruch 1, dadurch gekennzeichnet, daß die Sonotrodenanordnung (17) von einzelnen, voneinander unabhängig in dem Maschinengestell (14) befestigten sowie im wesenlichen länglichen Sonotroden (41) gebildet ist, von denen jede eine ebene Auflageflächen (42) für die Folien (24) aufweist, und daß alle Auflageflächen (42) in einer gemeinsamen Ebenen liegen und soweit dies nicht durch die Kontur der Schweißnähte (8,9,11) bedingt ist im wesenlichen lückenlos aneinander angrenzen.

3. Vorrichtung nach Anspruch 1, dadurch gekennzeichnet, daß die Sonotroden (41) derart angeordnet sind, daß sie mit ihren Längsachsen der Auflageflächen (42) zu den zugehörigen Schweiß- bzw. Schneidkanten (67,68) parallel ausgerichtet sind.

4. Vorrichtung nach Anspruch 1, dadurch gekennzeichnet, daß jede Sonotrode (41) eine balkenförmige Gestalt aufweist.

5. Vorrichtung nach Anspruch 1, dadurch gekennzeichnet, daß jede Sonotrode (41) bezogen auf ihre Längsersteckung in der Mitte und der Auflagefläche (42) gegenüber mit einer Schwingungserzeugungseinrichtung (52, 53) versehen ist.

6. Vorrichtung nach Anspruch 1, dadurch gekennzeichnet, daß die Sonotroden (41) durch die Schwingungserzeugungseinrichtung (52,53) in Longitudinalschwingungen zu versetzen sind, deren Schwingungsrichtung auf der Auflagefläche (42) senkrecht steht.

7. Vorrichtung nach Anspruch 1, dadurch gekennzeichnet, daß jede Sonotrode (41) mittels wenigstens zweier voneinander beabstandeter Befestigungsmittel (45) mit dem Maschinengestell (14) verbunden ist.

8. Vorrichtung nach Anspruch 7, dadurch gekennzeichnet, daß jede Sonotrode (41) zusätzlich mittels der Schwingungserzeugungseinrichtung mit dem Maschinengestell (14) verbunden ist.

9. Vorrichtung nach Anspruch 7, dadurch gekennzeichnet, daß das Befestigungsmittel ein Stab (45) ist, der mit der jeweiligen Sonotrode (41) an einer Stelle verbunden ist, an der in der schwingenden Sonotrode (41) ein Schwingungsknoten liegt.

10. Vorrichtung nach Anspruch 7, dadurch gekennzeichnet, daß die Länge des Stabes (45) bis zur Anbringung an dem Maschinengestell (14) gleich der halben Wellenlänge der in dem Stab (45) auftretenden Ultraschallschwingung oder einem ganzzahligen Vielfachen ist.

11. Vorrichtung nach Anspruch 9, dadurch gekennzeichnet, daß die balkenförmige Sonotrode (41) zwei Stirnseiten (43) aufweist und je ein Stab (45) an einer Stirnseite (43) befestigt ist.

12. Vorrichtung nach Anspruch 10, dadurch gekennzeichnet, daß die Sonotrode (41) zur Befestigung des Stabes (45) eine aus der Stirnseite (43) vorstehende Lasche (44) einstückig trägt.

13. Vorrichtung nach Anspruch 7, dadurch gekennzeichnet, daß das Befestigungsmittel ein Stab (45) ist, der an einer von der Auflagefläche (42) abliegenden Seite (51) der balkenfömigen Sonotrode (41) mit der Sonotrode (41) verbunden ist und an derjenigen Stelle, an der bei schwingender Sonotrode (41) in dem Stab (45) ein Schwingungsknoten liegt, einen Fortsatz (55) aufweist, der an dem Maschinengestell (14) befestig ist.

14. Vorrichtung nach Anspruch 12, dadurch gekennzeichnet, daß der Fortsatz ein Ringbund (55) ist, der um den Stab (45) herumführt.

15. Vorrichtung nach Anspruch 12, dadurch gekennzeichnet, daß der Stab (45) sich ausgehend von der Sonotrode (41) über den Fortsatz (55) hinaus erstreckt, derart, daß an dem frei Ende des Stabes (45) ein Schwingungsbauch liegt.

16. Vorrichtung nach den Ansprüchen 9 oder 12, dadurch gekennzeichnet, daß der Stab (45) mit seiner Längsachse im wesentlichen rechtwinkelig zu einer durch die Auflagefläche (42) definierten Ebene verläuft.

17. Vorrichtung nach Anspruch 1, dadurch gekennzeichnet, daß zwischen der Sonotrodenanordung (17) und dem Schweißstempel (16) ein endloses Förderband (18) verläuft und daß die die Einsteckhülle bzw. die Einbanddecke (1) bildenden Folien (24) zwischen dem Förderband (18) und dem Schweißstempel (16) verlaufen.

18. Vorrichtung nach Anspruch 2, dadurch gekennzeichnet, daß die Sonotroden (41) im wesentlichne lückenlos nebeneinander angeordnet sind, wobei ihre Längsachsen vorzugsweise parallel zueinander ausgerichtet sind, und daß die Auflageflächen (42) eine im wesentlichen geschlossene Tischfläche bilden, deren Größe der Maximalgröße von mit der Vorrichtung zu verarbeitenden Gegenständen entspricht.

19. Vorrichtung zum Herstellen von Produkten wie Einsteckhüllen oder Einbanddecken (1), wobei die Einsteckhüllen und die Einbanddecken (1) von miteinander an Schweißnähten (8,9,11) stoffschlüssig verbundenen termoplastischen Folien (24) gebildet sind,
mit einem Maschinengestell (14),
mit einer in dem Maschinengestell (14) angeordneten Plastifizierungseinrichtung (17), sowie
mit einem der Plastifizierungeinrichtung (17) gegenüber befindlichen und in dem Maschinengestell (14) angeordneten Schweißstempel (16),
mit den Konturen der Schweißnähte (8,9,11) entsprechende, im wesentlichen in einer Ebene liegende und an dem Schweißstempel (16) vorgesehenen Schweiß-bzw. Schneidkanten (67,68), von denen einige in Längsrichtung liegende Längskanten und andere in Querrichtung liegende Querkanten sind, jeweils bezogen auf die Transportrichtung der Folien (24), wobei wenigstens eine Querkante eine kombinierten Schweiß- und Schneidkante ist, zwei unmittelbar benachbarte Schweißnähte (9) von zwei an diesen Schweißnähten (9) benachbarten Produkten erzeugt und von dieser Querkante jeweils in beiden Richtungen Längskanten ausgehen, derart, daß mit einem Schweißzyklus die Schweißnähte (8,9,11) eines Produktes vervollständigt werden und Schweißnähte (8,9) des nachfolgenden Produktes begonnen werden, und daß ein Produkt in zwei aufeinander folgenden Zyklen erzeugt wird, und
mit einer Antriebseirichtung (38), durch die die Plastifizierungseirichtung (17) und der Scheißstempel (16) periodisch voneinander weg bzw. aufeinander zu bewegbar sind.
